# EUROPEAN PATENT SPECIFICATION

(11) **EP 4 245 815 B1**
(45) Date of publication and mention of the grant of the patent: **22.01.2025**
(21) Application number: 21891738.3
(22) Date of filing: 04.11.2021
(51) Int. Cl.: C09D 5/16, C09D 133/04, C09D 7/61, C09D 7/63

(54) **ANTIFOULING COATING MATERIAL COMPOSITION**
ANTIFOULING-BESCHICHTUNGSMATERIALZUSAMMENSETZUNG
COMPOSITION DE MATÉRIAU DE REVÊTEMENT ANTISALISSURES

(30) Priority: 10.11.2020 JP 2020187163
(43) Date of publication of application: 20.09.2023
(73) Proprietor: Nitto Kasei Co., Ltd., Osaka-shi Osaka 533-0031 (JP)
(72) Inventor: KITAMURA, Hitoshi, Osaka-shi, Osaka 533-0031 (JP)
(74) Representative: Gulde & Partner
(86) International application number: PCT/JP2021/040526
(87) International publication number: WO 2022/102492

(56) References cited:
- WO-A1-2020/045211
- WO-A1-96/41842
- JP-A- 2003 119 419
- JP-A- 2003 119 420
- JP-A- 2013 509 460
- JP-A- S5 847 066
- ROONEY THOMAS R., DAVIDE MOSCATELLI, ROBIN A. HUTCHINSON: "Polylactic acid macromonomer radical propagation kinetics and degradation behaviour,", REACTION CHEMISTRY & ENGINEERING, vol. 2, 1 January 2017 (2017-01-01), pages 487 - 497, XP055930569, DOI: 10.1039/x0xx00000x
- ROONEY THOMAS R., MONYATSI OTLAATLA, HUTCHINSON ROBIN A.: "Polyester Macromonomer Syntheses and Radical Copolymerization Kinetics with Styrene", MACROMOLECULES, AMERICAN CHEMICAL SOCIETY, US, vol. 50, no. 3, 14 February 2017 (2017-02-14), US , pages 784 - 795, XP055930571, ISSN: 0024-9297, DOI: 10.1021/acs.macromol.6b02297

## Description

### Technical Field

The present invention relates to an antifouling coating composition.

### Background Art

Aquatic fouling organisms such as barnacles, tubeworms, common mussels, brown bryozoan, sea squirts, green laver, sea lettuce, and slimes adhere to ships (especially ship bottoms), fishing tools such as fishing nets and fishing net accessories, and structures submerged in seawater such as power plant aqueducts, leading to dysfunction, impaired appearance, and other problems of the ships and the like.

In order to prevent such problems, there has been a technique to apply an antifouling coating composition onto ships and the like to form an antifouling coating film. Controlled release of an antifouling agent from the antifouling coating film allows to exhibit antifouling property for a long period of time (Patent Literatures 1 to 4).

However, the dissolution properties of the antifouling coating film comprising a polymer containing (meth)acrylic acid alkoxy carbonyl methyl ester group disclosed in Patent Literatures 1 to 4 were extremely low, and thus it was difficult to exhibit antifouling property for a long period of time.

To solve these problems, the technology to dissolve the coating film and exhibit antifouling property for a long period of time has been proposed (Patent Literature 5).

### Citation List

### Patent Literature

[Patent Literature 1] JP-B-Sho63-61989
[Patent Literature 2] JP-A-2003-119420
[Patent Literature 3] JP-A-2003-119419
[Patent Literature 4] JP-A-2020-3776
[Patent Literature 5] WO2020/045211

### Summary of Invention

### Technical Problem

Although the dissolution property and the like of the antifouling coating film comprising the antifouling coating composition disclosed in Patent Literature 5 has been improved, there is still room for improvement in terms of coating film properties such as cracking and peeling, and an antifouling coating composition capable of maintaining excellent coating film surface condition and antifouling performance for a long period of time has been desired.

The present invention has been made by taking the afore-mentioned problems into consideration. The present invention provides an antifouling coating composition capable of maintaining excellent coating film surface condition and antifouling performance for a long period of time.

### Solution to Problem

According to the present invention, provided is an antifouling coating composition containing a copolymer A and an antifouling agent, wherein: the copolymer A is a copolymer of a monomer (a) and an ethylenically unsaturated monomer (b) other than the monomer (a); the monomer (a) is constituted of a monomer (a1) and a monomer (a2); the monomer (a1) is represented by general formula (1); the monomer (a2) is represented by general formula (2); and a content of the monomer (a1) in the monomer (a) is 50 to 80 mass%.

The inventors have conducted intensive studies to solve the above-mentioned problems and have found that the composition containing the copolymer A and the antifouling agent can solve the above-mentioned problems, thereby leading to completion of the present invention.

### Description of Embodiments

Hereinafter, the present invention will be described in detail.

### 1. Antifouling Coating Composition

The antifouling coating composition of the present invention contains a copolymer A and an antifouling agent, and may contain a copolymer B and other additives.

### 1-1. Copolymer A

The copolymer A is a copolymer of a monomer (a) and an ethylenically unsaturated monomer (b) other than the monomer (a), and contains a monomer unit derived from the monomer (a) and the monomer (b). The content of the monomer (a) to the total of the monomer (a) and the monomer (b) is preferably 10 to 90 mass%, and more preferably 20 to 70 mass%. The content is, specifically for example, 10, 15, 20, 25, 30, 35, 40, 45, 50, 55, 60, 65, 70, 75, 80, 85, or 90 mass%, and may be in the range between the two values exemplified herein. In this case, the dissolution property of the coating film is particularly excellent.

### 1-1-1. Monomer (a)

The monomer (a) is constituted of a monomer (a1) and a monomer (a2). The content of the monomer (a1) in the monomer (a) is 50 to 80 mass%, preferably 55 to 75 mass%, and more preferably 60 to 70 mass%. Compared to the monomer (a2), the monomer (a1) has the property to increase the coating film strength and decrease the dissolution property of the coating film. For this reason, if the content of the monomer (a1) is too small, the coating film strength may be too low, and the coating film surface condition may easily deteriorate after a long period of time. On the other hand, if the content of the monomer (a1) is too high, the dissolution property of the coating film may be too low, resulting in reduced antifouling performance. The content of the monomer (a1) is, for example, 50, 55, 60, 65, 70, 75, or 80 mass%, and may be in the range between the two values exemplified herein.

### <Monomer (a1)>

The monomer (a1) is represented by general formula (1).

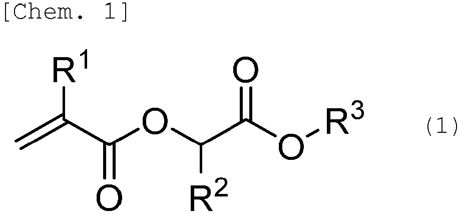

In general formula (1), R¹ represents a hydrogen atom or a methyl group, R² represents a hydrogen atom, a methyl group, or a phenyl group, and R³ represents an alkyl group which may be substituted with an alkoxy group having 1 to 8 carbon atoms or a phenyl group, or a phenyl group, the alkyl group having 1 to 8 carbon atoms.

Preferably, R² is a hydrogen atom or a methyl group. The number of carbon atoms of the alkoxy or alkyl group in R³ is, for example, 1, 2, 3, 4, 5, 6, 7, or 8, and may be in the range between the two values exemplified herein. R³ is, for example, a methyl group, an ethyl group, an n-propyl group, an isopropyl group, an n-butyl group, a t-butyl group, a 2-ethylhexyl group, a cyclohexyl group, a benzyl group, a phenyl group, a 2-methoxyethyl group, a 4-methoxybutyl group, a vinyl group, or an allyl group, and preferably a methyl group, an ethyl group, an isopropyl group, or an n-butyl group.

Examples of the monomer (a1) include methoxycarbonylmethyl (meth)acrylate, ethoxycarbonylmethyl (meth)acrylate, isopropoxycarbonylmethyl (meth)acrylate, n-propoxycarbonylmethyl (meth)acrylate, n-butoxycarbonylmethyl (meth)acrylate, t-butoxycarbonylmethyl (meth)acrylate, 2-ethylhexyloxycarbonylmethyl (meth)acrylate, cyclohexyloxycarbonylmethyl (meth)acrylate, benzyloxycarbonylmethyl (meth)acrylate, phenoxycarbonylmethyl (meth)acrylate, 2-methoxyethoxycarbonylmethyl (meth)acrylate, 4-methoxybutoxycarbonylmethyl (meth)acrylate, aryloxycarbonylmethyl (meth)acrylate, vinyloxycarbonylmethyl (meth)acrylate, 1-(methoxycarbonyl)ethyl (meth)acrylate, 1-(ethoxycarbonyl)ethyl (meth)acrylate, 1-(n-propoxycarbonyl)ethyl (meth)acrylate, 1-(isopropoxycarbonyl)ethyl (meth)acrylate, 1-(n-butoxycarbonyl) ethyl (meth)acrylate, 1-(t-butoxycarbonyl)ethyl (meth)acrylate, α-(methoxycarbonyl)benzyl (meth)acrylate and α-(ethoxycarbonyl)benzyl (meth)acrylate. Among them, methoxycarbonylmethyl (meth)acrylate, ethoxycarbonylmethyl (meth)acrylate, isopropoxycarbonylmethyl (meth)acrylate, n-propoxycarbonylmethyl (meth)acrylate, n-butoxycarbonylmethyl (meth)acrylate, 1-(methoxycarbonyl)ethyl (meth)acrylate, and 1-(ethoxycarbonyl)ethyl (meth)acrylate are preferred.

### <Monomer (a2)>

The monomer (a2) is represented by general formula (2).

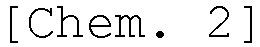

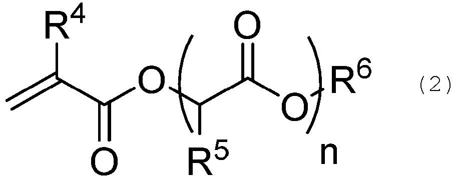

In general formula (2), R⁴ represents a hydrogen atom or a methyl group, R⁵ represents a hydrogen atom, a methyl group, or a phenyl group, R⁶ represents an alkyl group which may be substituted with an alkoxy group having 1 to 8 carbon atoms or a phenyl group, or a phenyl group, the alkyl group having 1 to 8 carbon atoms, and n represents an integer of 2 to 10.

Descriptions of R⁵ and R⁶ are the same as those of R² and R³, respectively.

n represents an integer of 2 to 10, and is preferably 2 to 6 in terms of long-term antifouling property. n is, for example, 2, 3, 4, 5, 6, 7, 8, 9, or 10, and may be in the range between the two values exemplified herein.

Preferably, the monomer (a2) contains both the compound where n is 2 and the compound where n is 3 or greater. In this case, a tendency for stable dissolution of the coating film to continue is observed.

Examples of the monomer (a2) include methyldi(oxycarbonylmethyl) (meth)acrylate, ethyldi(oxycarbonylmethyl) (meth)acrylate, isopropyldi(oxycarbonylmethyl) (meth)acrylate, n-propyldi(oxycarbonylmethyl) (meth)acrylate, n-butyldi(oxycarbonylmethyl) (meth)acrylate, t-butyldi(oxycarbonylmethyl) (meth)acrylate, 2-ethylhexyldi(oxycarbonylmethyl) (meth)acrylate, cyclohexyldi(oxycarbonylmethyl) (meth)acrylate, benzyldi(oxycarbonylmethyl) (meth)acrylate, phenyldi(oxycarbonylmethyl) (meth)acrylate, 2-methoxyethyldi(oxycarbonylmethyl) (meth)acrylate, 4-methoxybutyldi(oxycarbonylmethyl) (meth)acrylate, allyldi(oxycarbonylmethyl) (meth)acrylate, vinyldi(oxycarbonylmethyl) (meth)acrylate, methyldi[1-(oxypolycarbonyl)ethyl] (meth)acrylate, ethyldi[1-(oxypolycarbonyl)ethyl] (meth)acrylate, n-propyldi[1-(oxypolycarbonyl)ethyl] (meth)acrylate, isopropyl di[1-(oxypolycarbonyl)ethyl] (meth)acrylate, n-butyldi[1-(oxypolycarbonyl)ethyl] (meth)acrylate, t-butyldi[1-(oxypolycarbonyl)ethyl] (meth)acrylate, methyldi[α-(oxycarbonyl)benzyl] (meth)acrylate, and ethyldi[α-(oxycarbonyl)benzyl] (meth)acrylate. Preferably, the examples include methyldi(oxycarbonylmethyl) (meth)acrylate, ethyldi(oxycarbonylmethyl) (meth)acrylate, isopropyldi(oxycarbonylmethyl) (meth)acrylate, n-propyl di(oxycarbonylmethyl) (meth)acrylate, n-butyldi(oxycarbonylmethyl) (meth)acrylate, methyldi[1-(oxypolycarbonylethyl)] (meth)acrylate, ethyldi[1-(oxypolycarbonylethyl)] (meth)acrylate, methylpoly(oxycarbonylmethyl) (meth)acrylate, ethylpoly(oxycarbonylmethyl) (meth)acrylate, isopropylpoly(oxycarbonylmethyl) (meth)acrylate, n-propylpoly(oxycarbonylmethyl) (meth)acrylate, n-butylpoly(oxycarbonylmethyl) (meth)acrylate, t-butylpoly(oxycarbonylmethyl) (meth)acrylate, 2-ethylhexylpoly(oxycarbonylmethyl) (meth)acrylate, cyclohexylpoly(oxycarbonylmethyl) (meth)acrylate, benzylpoly(oxycarbonylmethyl) (meth)acrylate, phenylpoly(oxycarbonylmethyl) (meth)acrylate, 2-methoxyethylpoly(oxycarbonylmethyl) (meth)acrylate, 4-methoxybutylpoly(oxycarbonylmethyl) (meth)acrylate, allylpoly(oxycarbonylmethyl) (meth)acrylate, vinylpoly(oxycarbonylmethyl) (meth)acrylate, methylpoly[1-(oxypolycarbonyl)ethyl] (meth)acrylate, ethylpoly[1-(oxypolycarbonyl)ethyl] (meth)acrylate, n-propylpoly[1-(oxypolycarbonyl)ethyl] (meth)acrylate, isopropylpoly[1-(oxypolycarbonyl)ethyl] (meth)acrylate, n-butylpoly[1-(oxypolycarbonyl)ethyl] (meth)acrylate, t-butylpoly[1-(oxypolycarbonyl)ethyl] (meth)acrylate, methylpoly[α-(oxycarbonyl)benzyl] (meth)acrylate, and ethylpoly[α-(oxycarbonyl)benzyl] (meth)acrylate. Preferably, the examples include methylpoly(oxycarbonylmethyl) (meth)acrylate, ethylpoly(oxycarbonylmethyl) (meth)acrylate, isopropylpoly(oxycarbonylmethyl) (meth)acrylate, n-propylpoly(oxycarbonylmethyl) (meth)acrylate, n-butylpoly(oxycarbonylmethyl) (meth)acrylate, methylpoly[1-(oxypolycarbonylethyl)] (meth)acrylate, and ethylpoly[1-(oxypolycarbonylethyl)] (meth)acrylate.

### 1-1-2. Monomer (b)

The monomer (b) is an ethylenically unsaturated monomer other than the monomer (a). The monomer (b) can be classified into a monomer (b1) and a monomer (b2), and the monomer (b) used for polymerization of the copolymer A contains one or both of the monomer (b1) and the monomer (b2).

### <Monomer (b1)>

The monomer b1 is represented by general formula (3).

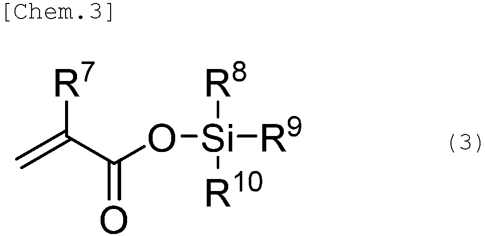

In general formula (3), R⁷ represents a hydrogen atom or a methyl group, and R⁸ to R¹⁰ each represent a branched alkyl group having 3 to 8 carbon atoms or a phenyl group, which are the same as or different from each other.

The number of the branched alkyl group is, for example, 3, 4, 5, 6, 7, or 8, and may be in the range between the two values exemplified herein. Examples of the branched alkyl group include an isopropyl group, an isopropenyl group, an isobutyl group, a s-butyl group, a t-butyl group, a 1-ethylpropyl group, a 1-methylbutyl group, a 1-methylpentyl group, a 1,1-dimethylpropyl group, a 1,1-dimethylbutyl group, a texyl group, a cyclohexyl group, a 1,1-dimethylpentyl group, a 1-methylhexyl group, a 1,1-dimethylhexyl group, a 1-methylheptyl group, a 2-methylbutyl group, a 2-ethylbutyl group, a 2,2-dimethylpropyl group, a cyclohexylmethyl group, a a2-ethylhexyl group, a 2-propylpentyl group, and a 3-methylpentyl group. Preferred as R⁸ to R¹⁰ are an isopropyl group, an isopropenyl group, a s-butyl group, a t-butyl group, a phenyl group, and a 2-ethylhexyl group, which are the same as or different from each other. Particularly, an isopropyl group and a 2-ethylhexyl group are preferred.

Examples of the monomer (b1) include (meth) acrylate silyl esters such as triisopropylsilyl (meth)acrylate, triisobutylsilyl (meth)acrylate, tri-s-butylsilyl(meth)acrylate, triisopentylsilyl (meth)acrylate, triphenylsilyl (meth)acrylate, diisopropylphenylsilyl (meth)acrylate, diisopropylisobutylsilyl (meth)acrylate, diisopropyl-s-butylsilyl (meth)acrylate, diisopropylisopentylsilyl (meth)acrylate, isopropyldiisobutylsilyl (meth)acrylate, isopropyl di-s-butylsilyl (meth)acrylate, t-butyldiisobutylsilyl (meth)acrylate, t-butyldiisopentylsilane (meth)acrylate, t-butyldiphenylsilyl (meth)acrylate, diisopropylthexylsilyl (meth)acrylate, diisopropylcyclohexylsilyl (meth)acrylate, tricyclohexylsilyl (meth)acrylate, tri-1,1-dimethylpentylsilyl (meth)acrylate, tri-2,2-dimethylpropylsilyl (meth)acrylate, tricyclohexylmethylsilyl (meth)acrylate, diisopropylcyclohexylmethylsilyl (meth)acrylate, tri-2-ethylhexylsilyl (meth)acrylate, and tri-2-propylpentylsilyl (meth)acrylate. These monomers (b1) can be used alone, or two or more of these can be used in combination.

### <Monomer (b2)>

The monomer (b2) is the monomer obtained by removing the monomer (b1) from the monomer (b). In other words, the monomer (b2) is the monomer that is not represented by any of general formulas (1) to (3). Examples of the monomer (b2) include (meth)acrylic acid esters, vinyl compounds, aromatic compounds, and dialkyl ester compounds of dibasic acid, which are not represented by general formulas (1) to (3). It should be noted that (meth)acrylic acid ester means acrylic acid ester or methacrylic acid ester in the present specification.

Examples of the (meth) acrylic acid ester which is not represented by general formulas (1) to (3) include (meth)acrylic acid esters such as methyl (meth)acrylate, ethyl (meth)acrylate, butyl (meth)acrylate, isobutyl (meth)acrylate, t-butyl (meth)acrylate, 2-ethylhexyl (meth)acrylate, lauryl (meth)acrylate, 2-methoxyethyl (meth)acrylate, 2-methoxypropyl (meth)acrylate, 4-methoxybutyl (meth)acrylate, benzyl (meth)acrylate, phenyl (meth)acrylate, 2-ethoxyethyl (meth)acrylate, propylene glycol monomethyl (meth)acrylate, 2-hydroxyethyl (meth)acrylate, 2-hydroxypropyl (meth)acrylate, glycidyl (meth)acrylate, furfuryl (meth)acrylate, tetrahydrofurfuryl (meth)acrylate, dimethylaminoethyl (meth)acrylate, diethylaminoethyl (meth)acrylate, 2-[2-(2-hydroxyethoxy)ethoxy]ethyl methacrylate, mono(2-(meth)acryloyloxyethyl) succinate, N-(3-dimethylaminopropyl) (meth)acrylamide, 2-hydroxyethyl (meth)acrylate, 2-[2-(2-methoxyethoxy)ethoxy]ethyl (meth)acrylate, and N,N'-dimethyl (meth)acrylamide.

Examples of the vinyl compound include vinyl compounds having a functional group such as vinyl chloride, vinylidene chloride, acrylonitrile, methacrylonitrile, vinyl acetate, vinyl benzoate, vinyl butyrate, butyl vinyl ether, lauryl vinyl ether, and N-vinyl pyrrolidone.

Examples of the aromatic compound include styrene, vinyltoluene, and α-methylstyrene.

Examples of the dialkyl ester compound of dibasic acid include dimethyl maleate, dibutyl maleate, and dimethyl fumarate.

In the copolymer A, these monomers (b) can be used alone, or two or more of these can be used in combination. From the viewpoint of the dissolution property of the coating film and the coating film property, the monomer (b) preferably contains (meth)acrylic acid ester of the monomer (b1) or the monomer (b2). From the viewpoint of crack resistance, the monomer (b) preferably contains (meth)acrylic acid ester of the monomer (b2), and more preferably contains methyl (meth)acrylate, butyl (meth)acrylate, isobutyl (meth)acrylate, t-butyl (meth)acrylate, 2-ethylhexyl (meth)acrylate, 2-methoxyethyl (meth)acrylate, 2-ethoxyethyl (meth)acrylate, 2-hydroxyethyl (meth)acrylate, glycidyl (meth)acrylate, furfuryl (meth)acrylate, tetrahydrofurfuryl (meth)acrylate or the like. From the viewpoint of the coating film property, the monomer (b) preferably contains the monomer (b1), and more preferably contains triisopropylsilyl (meth)acrylate, t-butyl diphenylsilyl (meth)acrylate, tri-2-ethylhexylsilyl (meth)acrylate or the like.

### 1-1-3. Physical Property and Production Method of Copolymer A

The weight average molecular weight (Mw) of the copolymer A is preferably 5000 to 300000. When the molecular weight is less than 5000, the coating film of the antifouling coating becomes weak, thereby prone to peeling and cracking. When the molecular weight exceeds 300000, the viscosity of the polymer solution increases, and thus handling becomes difficult. The Mw is, specifically for example, 5000, 10000, 20000, 30000, 40000, 50000, 60000, 70000, 80000, 90000, 100000, 200000, or 300000, and may be in the range between the two values exemplified herein.

As the method of measuring Mw, gel permeation chromatography (GPC method) can be mentioned for example.

The copolymer A may be any of a random copolymer, an alternating copolymer, a periodic copolymer, or a block copolymer of the monomer (a1), the monomer (a2), and the monomer (b).

The copolymer A can be, for example, obtained by polymerizing the monomer (a1), the monomer (a2), and the monomer (b) in the presence of a polymerization initiator.

Examples of the polymerization initiator include azo compounds such as 2,2'-azobisisobutyronitrile, 2,2'-azobis(2-methylbutyronitrile), 2,2'-azobis(2,4-dimethylvaleronitrile), dimethyl-2,2'-azobisisobutyrate, and 2,2'-azobis(N-butyl-2-methylpropionamide); and peroxides such as benzoyl peroxide, di-tert-butyl peroxide, tert-butyl peroxybenzoate, tert-butyl peroxyisopropylcarbonate, t-butyl peroxy-2-ethylhexanoate, t-hexyl peroxy-2-ethylhexanoate, di-t-hexylperoxide, t-butyl peroxy-2-ethylhexyl monocarbonate, di-t-butylperoxide, 1,1,3,3-tetramethylbutyl peroxyneodecanoate, t-amyl peroxyneodecanoate, t-hexyl peroxypivalate, t-amyl peroxypivalate, and 1,1,3,3-tetramethylbutyl peroxy-2-ethylhexanoate. These polymerization initiators can be used alone, or two or more of these can be used in combination. As the polymerization initiator, 2,2'-azobisisobutyronitrile, 2,2'-azobis(2-methylbutyronitrile), 2,2'-azobis(2,4-dimethylvaleronitrile), dimethyl-2,2'-azobisisobutyrate, and 1,1,3,3-tetramethylbutyl peroxy-2-ethylhexanoate are particularly preferable. By suitably selecting the amount of the polymerization initiator being used, the molecular weight of the copolymer A can be adjusted.

As the polymerization method, liquid polymerization, bulk polymerization, emulsion polymerization, suspension polymerization, non-aqueous dispersion polymerization and the like can be mentioned. Among these, liquid polymerization or non-aqueous dispersion polymerization is preferable since it can synthesize the copolymer A simply and accurately.

In the polymerization reaction, organic solvent can be used as necessary. Here, organic solvent is not particularly limited. Examples of the organic solvent include aromatic hydrocarbon-based solvents such as xylene and toluene; aliphatic hydrocarbon-based solvents; ester-based solvents such as ethyl acetate, butyl acetate, isobutyl acetate, methoxy propyl acetate, and propylene glycol 1-monomethyl ether 2-acetate; alcohol-based solvents such as isopropyl alcohol, butyl alcohol, and propylene glycol monomethyl ether; ether-based solvents such as dioxane, diethyl ether, and dibutyl ether; and ketone-based solvents such as methyl ethyl ketone and methyl isobutyl keton.

Among these, butyl acetate, isobutyl acetate, butyl alcohol, propylene glycol monomethyl ether, propylene glycol 1-monomethylether 2-acetate, toluene, and xylene are preferable. These solvents can be used alone, or two or more of these can be used in combination. The reaction temperature in the polymerization reaction can be suitably controlled depending on the type of the polymerization initiator used and the like. The reaction temperature is usually 50 to 160°C, and preferably 60 to 150°C.

The polymerization reaction is preferably performed under inert gas atmosphere such as nitrogen gas and argon gas.

### 1-2. Copolymer B

The copolymer B is a copolymer of the monomer (b1) and the monomer (b2), and contains a monomer unit derived from the monomer (b1) and the monomer (b2). The content of the monomer (b1) to the total of the monomer (b1) and the monomer (b2) is preferably 10 to 90 mass%, and more preferably 20 to 70 mass%. The content is, specifically for example, 10, 15, 20, 25, 30, 35, 40, 45, 50, 55, 60, 65, 70, 75, 80, 85, or 90 mass%, and may be in the range between the two values exemplified herein. In this case, the dissolution property of the coating film is particularly excellent.

As the polymerization method, initiator, solvent, temperature, other conditions, measurement method of Mw, and the like, those mentioned for the copolymer A can be applied.

The content of the copolymer B in the composition of the present invention is not particularly limited. The content ratio with respect to the copolymer A, that is, the mass ratio (the copolymer B/the copolymer A), is usually 0.1 to 0.9, and preferably 0.3 to 0.7 in terms of solid content. The mass ratio is, for example, 0.1, 0.2, 0.3, 0.4, 0.5, 0.6, 0.7, 0.8, or 0.9, and may be in the range between the two values exemplified herein.

### 1-3. Antifouling Agent

As the antifouling agent, an inorganic chemical and an organic chemical can be mentioned for example.

As the inorganic chemical, for example, cuprous oxide, cuprous thiocyanate (generic name: copper rhodanide), copper powder and the like can be mentioned. Among these, cuprous oxide and copper rhodanide are preferable. Cuprous oxide is preferably surface-treated with glycerin, sucrose, stearic acid, lauric acid, lecithin, mineral oil and the like in terms of long-term shelf stability.

As the organic chemical, for example, copper 2-mercaptopyridine-N-oxide (generic name: copper pyrithione), zinc 2-mercaptopyridine-N-oxide (generic name: zinc pyrithione), zinc ethylenebis(dithiocarbamate) (generic name: zineb), 4,5-dichloro-2-n-octyl-3-isothiazolone (generic name: Sea-nine 211), 3,4-dichlorophenyl-N-N-dimethylurea (generic name: Diuron), 2-methylthio-4-t-butylamino-6-cyclopropylamino-s-triazine (generic name: Irgarol 1051), 2-(p-chlorophenyl)-3-cyano-4-bromo-5-trifluoromethyl pyrrole (generic name: ECONEA 28), 4-[1-(2,3-dimethylphenyl)ethyl]-1H-imidazole (generic name: Medetomidine) and the like can be mentioned.

These antifouling agents can be used alone, or two or more of these can be used in combination.

The content of the antifouling agent in the composition of the present invention is not particularly limited, and usually 0.1 to 60.0 mass% in terms of solid content. The content of the antifouling agent is, for example, 0.1, 0.5, 1, 2, 3, 4, 5, 6, 7, 8, 9, 10, 15, 20, 25, 30, 35, 40, 45, 50, 55, or 60 mass%, and may be in the range between the two values exemplified herein.

### 1-4. Other Additives

Further, the antifouling coating resin of the present invention can further contain a resin component other than copolymers A and B, a release modifier, a plasticizer, a pigment, a dye, an antifoaming agent, a dehydrating agent, a thixotropic agent, an organic solvent and the like as necessary, thereby giving the antifouling coating.

As the other resin component, a polymer P and the like can be mentioned for example.

The polymer P is a polymer which can be obtained by polymerizing the monomer (b2).

In the present invention, one type of the monomer (b2) can be used alone, or two or more types of the monomer (b2) can be used in combination. Particularly, in terms of compatibility with the copolymer A, methyl (meth)acrylate, ethyl (meth)acrylate, butyl (meth)acrylate, isobutyl (meth)acrylate, t-butyl (meth)acrylate, 2-ethylhexyl (meth)acrylate, 2-methoxyethyl (meth)acrylate, 2-ethoxyethyl (meth)acrylate, furfuryl (meth)acrylate, tetrahydrofurfuryl (meth)acrylate, benzyl (meth)acrylate, and the like are preferable.

As the polymerization method, initiator, solvent, temperature, other conditions, measurement method of Mw, and the like, those mentioned for the copolymer A can be applied.

The content of the polymer P in the composition of the present invention is not particularly limited. The content ratio with respect to the copolymer A, that is, the mass ratio (the polymer P/the copolymer A), is usually 0.1 to 0.5, and preferably 0.1 to 0.3 in terms of solid content. The mass ratio is, for example, 0.1, 0.2, 0.3, 0.4, or 0.5, and may be in the range between the two values exemplified herein.

As the release modifier, for example, rosin, rosin derivative, naphthenic acid, cycloalkenyl carboxylic acid, bicycloalkenyl carboxylic acid, versatic acid, trimethyl isobutenyl cyclohexene carboxylic acid, and metal salts thereof; monocarboxylic acid and salts thereof; and the afore-mentioned alicyclic hydrocarbon resin can be mentioned. These release modifiers can be used alone, or two or more of these can be used in combination.

As the rosin derivative, hydrogenated rosin, disproportionated rosin, maleic acid modified rosin, formylated rosin, polymerized rosin and the like can be exemplified.

As the alicyclic hydrocarbon resin, for example, Quintone 1500, Quintone 1525L, Quintone 1700 (product name, made by Zeon Corporation) and the like can be mentioned as commercially available product.

Among these, rosin, rosin derivative, naphthenic acid, versatic acid, trimethyl isobutenyl cyclohexene carboxylic acid, and metal salts thereof are preferable.

As the plasticizer, phosphoric acid ester, phthalic acid ester, adipic acid ester, sebacic acid ester, polyester, epoxidized soybean oil, alkyl vinyl ether polymer, polyalkylene glycol, t-nonylpentasulfide, Vaseline, polybutene, tris(2-ethylhexyl)trimellitate, silicone oil, chlorinated paraffin and the like can be mentioned for example. These plasticizers can be used alone, or two or more of these can be used in combination.

As the dehydrating agent, calcium sulfate, synthetic zeolite-based adsorbent, orthoester, silicate such as tetramethoxysilane and tetraethoxysilane, isocyanate, carbodiimide, carbodimidazole and the like can be mentioned. These can be used alone, or two or more of these can be used in combination.

### 2. Production Method of Antifouling Coating Composition

The antifouling coating composition of the present invention can be produced, for example, by mixing and dispersing a solution mixture containing a copolymer, an antifouling agent, other additives, and the like by use of a disperser.

As the solution mixture, the one obtained by dissolving or dispersing various materials such as the copolymer, the antifouling agent and the like in a solvent is preferable.

As the disperser, for example, the one which can be used as a micro-pulverizer can be suitably used. For example, a commercially available homo mixer, a sand mill, a bead mill, a disper and the like can be used. Furthermore, the solution mixture may be mixed and dispersed by using a stirrer-equipped container containing glass beads for mixing and dispersing.

### 3. Method of Antifouling Treatment, Antifouling Coating Film, and Coated Object

In the method of antifouling treatment according to the present invention, an antifouling coating film is formed by coating with the above-mentioned antifouling coating composition the surface of an object on which the coating film is to be formed. The method of antifouling treatment according to the present invention can prevent adhesion of aquatic fouling organisms by the gradual dissolution of the surface of the antifouling coating film such that the surface of the coating film is continually renewed.

Examples of the object on which the coating film is to be formed include ships (in particular, ship bottoms), fishing tools, and structures submerged in seawater.

The thickness of the antifouling coating film can be suitably selected depending on the type of the object on which the coating film is to be formed, the navigation speed of a ship, the seawater temperature and the like. For example, when the object on which the coating film is to be formed is a ship bottom, the thickness of the antifouling coating film is usually 50 to 700 µm, and preferably 100 to 600 µm.

### Examples

Examples and the like are provided hereinafter to further clarify characteristics of the present invention. The present invention, however, is not limited to these Examples and the like.

In each of Production Examples, Examples, and Comparative Examples, "%" denotes "mass%". The weight average molecular weight (Mw) is a value determined by gel permeation chromatography (GPC) (a polystyrene conversion value). The conditions for GPC are as follows.
Equipment: HLC-8220 GPC (made by Tosoh Corporation)
Column: TSK-gel Super HZM-M, two columns used
Flow Rate: 0.35 mL/min
Detector: RI
Temperature of Column Thermostatic Chamber: 40°C
Eluent: THF

The non-volatile matter content is a value measured in accordance with JIS K 5601-1-2:1999 (ISO 3251:1993) "testing methods for paint components - non-volatile matter content".

### 1. Production Examples

### 1-1. Production Example of Monomer (a1)

### <Production Example 1 (Production of Monomer a1-1)>

109 g (1.00 mol) of methyl chloroacetate, 72 g (1.00 mol) of acrylic acid, 0.1 g of 4-methoxyphenol, and 500 g of ethyl acetate were charged to a four-necked flask equipped with a thermometer, a condenser, a stirrer, and a dropping funnel, and 101 g (1.00 mol) of triethylamine was dropped with stirring while keeping the temperature at 40°C or below. After completion of dropping, the reaction mixture was stirred for 6 hours at 70 to 80°C. After completion of the reaction, the organic layer was washed with city water, hydrochloric acid solution, and sodium bicarbonate solution in this order. Subsequently, the solvent was removed by condensation under reduced pressure, thereby obtaining 129.7 g of the monomer a1-1.

### <Production Examples 2 to 7 (Production of Monomers a1-2 to a1-7)>

Raw materials shown in Table 1 were used, and the reaction was performed by procedures similar to those of Production Example 1, thereby obtaining the monomers a1-2 to a1-7. Reaction conditions and yields of Production Examples 1 to 7 are shown in Table 1.

**[Table 1]**

| Table 1 | | | | | Raw Material (g) | | | | | | | | | | Yield |
|---|---|---|---|---|---|---|---|---|---|---|---|---|---|---|---|
| Production Example | Monomer | R¹ | R² | R³ | CAMe | CAEt | CAiPr | CAnBu | CPAMe | AA | MAA | TEA | Ethyl Acetate | MEHQ | (g) |
| 1 | a1-1 | H | H | Me | 109 | | | | | 72 | | 101 | 500 | 0.1 | 129.7 |
| 2 | a1-2 | H | H | Et | | 123 | | | | 72 | | 101 | 500 | 0.1 | 142.3 |
| 3 | a1-3 | Me | H | Me | 109 | | | | | | 86 | 101 | 500 | 0.1 | 142.3 |
| 4 | a1-4 | Me | H | Et | | 123 | | | | | 86 | 101 | 500 | 0.1 | 155.0 |
| 5 | a1-5 | H | H | iPr | | | 137 | | | 72 | | 101 | 500 | 0.1 | 155.0 |
| 6 | a1-6 | H | H | Bu | | | | 151 | | 72 | | 101 | 500 | 0.1 | 167.6 |
| 7 | a1-7 | H | Me | Me | | | | | 123 | 72 | | 101 | 500 | 0.1 | 142.3 |

### 1-2. Production Example of Monomer (a2)

### <Production Example 8 (Production of Monomer a2-1)>

### (First Reaction)

215 g (1.85 mol) of sodium monochloroacetate, 201 g (1.85 mol) of methyl chloroacetate, and 300 g of N-methyl-2-pyrrolidone were charged to a four-necked flask equipped with a thermometer, a condenser, and a stirrer, and the mixture was stirred for 6 hours at 70 to 80°C. After completion of the reaction, 500 ml of toluene was charged to the reaction solution, and then the organic layer was washed with city water, hydrochloric acid solution, and sodium bicarbonate solution in this order. Subsequently, the solvent was removed by condensation under reduced pressure, thereby obtaining 262 g of methoxycarbonylmethyl chloroacetate.

### (Second Reaction)

Subsequently, 200 g (1.20 mol) of methoxycarbonylmethyl chloroacetate as the product material of the first reaction, 87 g (1.20 mol) of acrylic acid, 0.1 g of 4-methoxyphenol, and 500 g of ethyl acetate were charged to a four-necked flask equipped with a thermometer, a condenser, a stirrer, and a dropping funnel, and 122 g (1.20 mol) of triethylamine was dropped with stirring while keeping the temperature at 40°C or below. After completion of dropping, the reaction mixture was stirred for 6 hours at 70 to 80°C. After completion of the reaction, the organic layer was washed with city water, hydrochloric acid solution, and sodium bicarbonate solution in this order. Subsequently, the solvent was removed by condensation under reduced pressure, thereby obtaining 230.6 g of the monomer a2-1.

### <Production Examples 9 to 42 (Production of Monomers a2-2 to a2-35)>

Raw materials shown in Tables 3 to 4 were used, and the reaction was performed by procedures similar to those of Production Example 8, thereby obtaining the monomers a2-2 to a2-35 shown in Table 2. Reaction conditions and yields of Production Examples 8 to 42 are shown in Tables 3 to 4.

**[Table 2]**

| Table 2 | | | | | |
|---|---|---|---|---|---|
| Production Example | Monomer | R¹ | R² | R³ | n |
| 8 | a2-1 | H | H | Me | 2 |
| 9 | a2-2 | H | H | Et | 2 |
| 10 | a2-3 | Me | H | Me | 2 |
| 11 | a2-4 | Me | H | Et | 2 |
| 12 | a2-5 | H | H | iPr | 2 |
| 13 | a2-6 | H | H | Bu | 2 |
| 14 | a2-7 | H | Me | Me | 2 |
| 15 | a2-8 | H | H | Me | 3 |
| 16 | a2-9 | H | H | Et | 3 |
| 17 | a2-10 | Me | H | Me | 3 |
| 18 | a2-11 | Me | H | Et | 3 |
| 19 | a2-12 | H | H | iPr | 3 |
| 20 | a2-13 | H | H | Bu | 3 |
| 21 | a2-14 | H | Me | Me | 3 |
| 22 | a2-15 | H | H | Me | 4 |
| 23 | a2-16 | H | H | Et | 4 |
| 24 | a2-17 | Me | H | Me | 4 |
| 25 | a2-18 | Me | H | Et | 4 |
| 26 | a2-19 | H | H | iPr | 4 |
| 27 | a2-20 | H | H | Bu | 4 |
| 28 | a2-21 | H | Me | Me | 4 |
| 29 | a2-22 | H | H | Me | 5 |
| 30 | a2-23 | H | H | Et | 5 |
| 31 | a2-24 | Me | H | Me | 5 |
| 32 | a2-25 | Me | H | Et | 5 |
| 33 | a2-26 | H | H | iPr | 5 |
| 34 | a2-27 | H | H | Bu | 5 |
| 35 | a2-28 | H | Me | Me | 5 |
| 36 | a2-29 | H | H | Me | 6 |
| 37 | a2-30 | H | H | Et | 6 |
| 38 | a2-31 | Me | H | Me | 6 |
| 39 | a2-32 | Me | H | Et | 6 |
| 40 | a2-33 | H | H | iPr | 6 |
| 41 | a2-34 | H | H | Bu | 6 |
| 42 | a2-35 | H | Me | Me | 6 |

**[Table 3]**

| Table 3 | First Reaction | | | | | | | | |
|---|---|---|---|---|---|---|---|---|---|
| | Raw Material (g) | | | | | | | | Intermediate |
| Production Example | CANa | CPANa | CAMe | CAEt | CAiPr | CAnBu | CPAMe | NMP | Yield (g) |
| 8 | 215 | | 201 | | | | | 300 | 262 |
| 9 | 199 | | | 209 | | | | 300 | 269 |
| 10 | 215 | | 201 | | | | | 300 | 262 |
| 11 | 199 | | | 209 | | | | 300 | 269 |
| 12 | 188 | | | | 220 | | | 300 | 276 |
| 13 | 178 | | | | | 230 | | 300 | 284 |
| 14 | | 228 | | | | | 214 | 300 | 272 |
| 15 | 321 | | 150 | | | | | 300 | 260 |
| 16 | 305 | | | 160 | | | | 300 | 266 |
| 17 | 321 | | 150 | | | | | 300 | 260 |
| 18 | 305 | | | 160 | | | | 300 | 266 |
| 19 | 256 | | | | 150 | | | 300 | 231 |
| 20 | 247 | | | | | 160 | | 300 | 237 |
| 21 | | 287 | | | | | 135 | 300 | 231 |
| 22 | 384 | | 119 | | | | | 300 | 261 |
| 23 | 349 | | | 123 | | | | 300 | 252 |
| 24 | 384 | | 119 | | | | | 300 | 261 |
| 25 | 349 | | | 123 | | | | 300 | 252 |
| 26 | 332 | | | | 130 | | | 300 | 245 |
| 27 | 314 | | | | | 136 | | 300 | 245 |
| 28 | | 392 | | | | | 123 | 300 | 258 |
| 29 | 419 | | 98 | | | | | 300 | 258 |
| 30 | 373 | | | 98 | | | | 300 | 241 |
| 31 | 419 | | 98 | | | | | 300 | 258 |
| 32 | 382 | | | 100 | | | | 300 | 247 |
| 33 | 377 | | | | 111 | | | 300 | 248 |
| 34 | 373 | | | | | 120 | | 300 | 257 |
| 35 | | 418 | | | | | 98 | 300 | 245 |
| 36 | 437 | | 81 | | | | | 300 | 251 |
| 37 | 408 | | | 86 | | | | 300 | 246 |
| 38 | 443 | | 82 | | | | | 300 | 255 |
| 39 | 408 | | | 86 | | | | 300 | 246 |
| 40 | 396 | | | | 93 | | | 300 | 241 |
| 41 | 379 | | | | | 98 | | 300 | 241 |
| 42 | | 437 | | | | | 82 | 300 | 237 |

**[Table 4]**

| Table 4 | Second Reaction | | | | | | |
|---|---|---|---|---|---|---|---|
| | Raw Material (g) | | | | | | Yield |
| Production Example | Intermediate | AA | MAA | TEA | Ethyl Acetate | MEHQ | (g) |
| 8 | 200 | 87 | | 122 | 500 | 0.1 | 230.6 |
| 9 | 200 | 80 | | 112 | 500 | 0.1 | 227.5 |
| 10 | 200 | | 103 | 122 | 500 | 0.1 | 230.6 |
| 11 | 200 | | 95 | 112 | 500 | 0.1 | 227.5 |
| 12 | 200 | 74 | | 104 | 500 | 0.1 | 224.8 |
| 13 | 200 | 69 | | 97 | 500 | 0.1 | 222.4 |
| 14 | 200 | 74 | | 104 | 500 | 0.1 | 224.8 |
| 15 | 200 | 64 | | 90 | 500 | 0.1 | 220.1 |
| 16 | 200 | 60 | | 85 | 500 | 0.1 | 218.3 |
| 17 | 200 | | 77 | 90 | 500 | 0.1 | 220.1 |
| 18 | 200 | | 72 | 85 | 500 | 0.1 | 218.3 |
| 19 | 200 | 57 | | 80 | 500 | 0.1 | 216.8 |
| 20 | 200 | 54 | | 76 | 500 | 0.1 | 215.4 |
| 21 | 200 | | 68 | 80 | 500 | 0.1 | 216.8 |
| 22 | 200 | 51 | | 72 | 500 | 0.1 | 232.8 |
| 23 | 200 | 49 | | 68 | 500 | 0.1 | 193.6 |
| 24 | 200 | | 61 | 72 | 500 | 0.1 | 193.8 |
| 25 | 200 | | 58 | 68 | 500 | 0.1 | 193.6 |
| 26 | 200 | 46 | | 65 | 500 | 0.1 | 193.4 |
| 27 | 200 | 44 | | 62 | 500 | 0.1 | 193.3 |
| 28 | 200 | | 55 | 65 | 500 | 0.1 | 193.4 |
| 29 | 200 | 42 | | 59 | 500 | 0.1 | 208.8 |
| 30 | 200 | 41 | | 57 | 500 | 0.1 | 177.0 |
| 31 | 200 | | 51 | 59 | 500 | 0.1 | 176.4 |
| 32 | 200 | | 49 | 57 | 500 | 0.1 | 177.0 |
| 33 | 200 | 39 | | 55 | 500 | 0.1 | 177.4 |
| 34 | 200 | 38 | | 53 | 500 | 0.1 | 177.9 |
| 35 | 200 | | 47 | 55 | 500 | 0.1 | 177.4 |
| 36 | 200 | 36 | | 51 | 500 | 0.1 | 191.8 |
| 37 | 200 | 35 | | 49 | 500 | 0.1 | 165.0 |
| 38 | 200 | | 43 | 51 | 500 | 0.1 | 164.1 |
| 39 | 200 | | 42 | 49 | 500 | 0.1 | 165.0 |
| 40 | 200 | 34 | | 47 | 500 | 0.1 | 165.8 |
| 41 | 200 | 33 | | 46 | 500 | 0.1 | 166.6 |
| 42 | 200 | | 40 | 47 | 500 | 0.1 | 165.8 |

Details of the raw materials shown in Tables 1 to 4 are as follows.
AA: acrylic acid
MAA: methacrylic acid
NMP: N-methyl-2-pyrrolidone
CANa: sodium monochloroacetate
CPANa: sodium 2-chloropropionate
CAMe: methyl chloroacetate
CAEt: ethyl chloroacetate
CAiPr: isopropyl chloroacetate
CAnBu: n-butyl chloroacetate
CPAMe: methyl 2-chloropropionate
MEHQ: 4-methoxyphenol
TEA: triethylamine

### 1-3. Production Example of Copolymer Solution

### <Production Example P1 (Production of Copolymer Solution A-1)>

As solvent, 50 g of xylene and 50 g of propylene glycol monomethyl ether were charged to a four-necked flask equipped with a thermometer, a condenser, a stirrer, and a dropping funnel, followed by introduction of nitrogen gas, and then the mixture was maintained at 88°C with stirring. To the solvent mixture, a mixture of the monomers (a) and (b) having the blending amount (g) shown in Table 5, and 2.0 g (initial addition) of 1,1,3,3-tetramethylbutyl peroxy-2-ethylhexanoate as polymerization initiator was dropped for 3 hours while maintaining the reaction mixture at 88°C. Subsequently, after stirring for 1 hour at 88°C, 0.1 g of 1,1,3,3-tetramethylbutyl peroxy-2-ethylhexanoate was added every 1 hour for three times, followed by stirring for 2 hours at the same temperature. Then, the reaction mixture was cooled to room temperature to obtain the copolymer solution A-1. Non-volatile matter content and Mw of A-1 are shown in Table 5.

### <Production Examples P2 to P33 (Production of Copolymer Solutions A-2 to A-25, B-1 to B-3, and C-1 to C-5)>

Except for the usage of the monomer and the solvent as shown in Tables 5 to 8, the polymerization reaction was performed by procedures similar to those of Production Example P1, thereby obtaining the copolymer solutions A-2 to A-25, B1 to B3, and C-1 to C-5. Non-volatile matter content and Mw of each polymer are shown in Tables 5 to 8. The units of the numerical values of the blending amount of the raw materials in Tables are g.

**[Table 5]**

| Table 5 | | | Production Example of Copolymer Solution | | | | | | | |
|---|---|---|---|---|---|---|---|---|---|---|
| | | | P1 | P2 | P3 | P4 | P5 | P6 | P7 | P8 |
| | a1 | a1-1 | 30 | 37 | 47 | 33 | | | | |
| | | a1-2 | | | | | 30 | 40 | 47 | 40 |
| | | a2-1 | 15 | 13 | 9 | 11 | | | | |
| | | a2-2 | | | | | 15 | 12 | 9 | 12 |
| | | a2-8 | 9 | 6 | 2 | 4 | | | | |
| Monomer (a) | | a2-9 | | | | | 9 | 5 | 2 | 5 |
| | a2 | a2-15 | 3 | 2 | 1 | 1 | | | | |
| | | a2-16 | | | | | 4 | 1 | 1 | 1 |
| | | a2-22 | 2 | 1 | 1 | 1 | | | | |
| | | a2-23 | | | | | 1 | 1 | 1 | 1 |
| | | a2-29 | 1 | 1 | | | | | | |
| | | a2-30 | | | | | 1 | 1 | | 1 |
| Monomer (b) | b2 | Methyl Methacrylate | 30 | 40 | 30 | 40 | 35 | 30 | 35 | 30 |
| | | 2-Methoxyethyl Acrylate | 10 | | 5 | 10 | 5 | 10 | 5 | |
| | | 2-Methoxyethyl Methacrylate | | | | | | | | 10 |
| | | n-Butyl Acrylate | | | 5 | | | | | |
| Total of Monomers | | | 100 | 100 | 100 | 100 | 100 | 100 | 100 | 100 |
| Solvent | | Xylene | 50 | 80 | 50 | 80 | 80 | 80 | 100 | 100 |
| | | 1-Butanol | | 20 | | 20 | 20 | 20 | | |
| | | Propyleneglycol Monomethyl Ether | 50 | | 50 | | | | | |
| Content of Monomer (a1) in Monomer (a) | | | 50% | 62% | 78% | 66% | 50% | 67% | 78% | 67% |
| Weight Average Molecular Weight (Mw) | | | 28500 | 31200 | 29000 | 31200 | 29600 | 31400 | 28900 | 29900 |
| Non-volatile Matter Content(%, 125°C, 1hour) | | | 51.2 | 51.5 | 50.8 | 51.5 | 51.3 | 51.2 | 51.1 | 51.3 |
| Name of Copolymer Solution | | | A-1 | A-2 | A-3 | A-4 | A-5 | A-6 | A-7 | A-8 |

**[Table 6]**

| Table 6 | | | Production Example of Copolymer Solution | | | | | | | |
|---|---|---|---|---|---|---|---|---|---|---|
| | | | P9 | P10 | P11 | P12 | P13 | P14 | P15 | P16 |
| | a1 | a1-3 | 30 | 40 | 47 | | | | | |
| | | a1-4 | | | | 30 | 40 | 47 | | |
| | | a1-5 | | | | | | | 30 | 40 |
| | | a2-3 | 15 | 12 | 9 | | | | | |
| | | a2-4 | | | | 15 | 12 | 9 | | |
| | | a2-5 | | | | | | | 15 | 12 |
| | | a2-10 | 9 | 5 | 2 | | | | | |
| | | a2-11 | | | | 9 | 5 | 2 | | |
| | | a2-12 | | | | | | | 9 | 5 |
| Monomer (a) | | a2-17 | 4 | 1 | 1 | | | | | |
| | a2 | a2-18 | | | | 4 | 1 | 1 | | |
| | | a2-19 | | | | | | | 4 | 1 |
| | | a2-24 | 1 | 1 | 1 | | | | | |
| | | a2-25 | | | | 1 | 1 | 1 | | |
| | | a2-26 | | | | | | | 1 | 1 |
| | | a2-31 | 1 | 1 | | | | | | |
| | | a2-32 | | | | 1 | 1 | | | |
| | | a2-33 | | | | | | | 1 | 1 |
| Monomer (b) | b2 | Methyl Methacrylate | 40 | 30 | 30 | 30 | 30 | 30 | 30 | 30 |
| | | 2-Methoxyethyl Acrylate | | 5 | 10 | | 5 | 10 | | 10 |
| | | n-Butyl Acrylate | | 5 | | 10 | 5 | | 10 | |
| Total of Monomers | | | 100 | 100 | 100 | 100 | 100 | 100 | 100 | 100 |
| Solvent | | Xylene | 100 | 100 | 100 | 100 | 100 | 100 | 50 | 50 |
| | | Propyleneglycol Monomethyl Ether | | | | | | | 50 | 50 |
| Content of Monomer (a1) in Monomer (a) | | | 50% | 67% | 78% | 50% | 67% | 78% | 50% | 67% |
| Weight Average Molecular Weight (Mw) | | | 29000 | 29700 | 30500 | 31000 | 28800 | 29900 | 31500 | 30800 |
| Non-volatile Matter Content(%, 125°C, 1hour) | | | 51.6 | 50.8 | 51.6 | 51.4 | 51.2 | 51.3 | 51.0 | 50.9 |
| Name of Copolymer Solution | | | A-9 | A-10 | A-11 | A-12 | A-13 | A-14 | A-15 | A-16 |

**[Table 7]**

| Table 7 | | | Production Example of Copolymer Solution | | | | | | | | |
|---|---|---|---|---|---|---|---|---|---|---|---|
| | | | P17 | P18 | P19 | P20 | P21 | P22 | P23 | P24 | P25 |
| | a1 | a1-2 | | | | | | | | 15 | 19 |
| | | a1-5 | 47 | | | | | | | | |
| | | a1-6 | | 30 | 40 | 47 | | | | | |
| | | a1-7 | | | | | 30 | 40 | 47 | | |
| | | a2-2 | | | | | | | | 7 | 6 |
| | | a2-5 | 9 | | | | | | | | |
| | | a2-6 | | 15 | 12 | 9 | | | | | |
| | | a2-7 | | | | | 15 | 12 | 9 | | |
| | | a2-9 | | | | | | | | 4 | 2 |
| | | a2-12 | 2 | | | | | | | | |
| | | a2-13 | | 9 | 5 | 2 | | | | | |
| Monomer (a) | | a2-14 | | | | | 9 | 5 | 2 | | |
| | | a2-16 | | | | | | | | 2 | 1 |
| | a2 | a2-19 | 1 | | | | | | | | |
| | | a2-20 | | 4 | 1 | 1 | | | | | |
| | | a2-21 | | | | | 4 | 1 | 1 | | |
| | | a2-23 | | | | | | | | 1 | 1 |
| | | a2-26 | 1 | | | | | | | | |
| | | a2-27 | | 1 | 1 | 1 | | | | | |
| | | a2-28 | | | | | 1 | 1 | 1 | | |
| | | a2-30 | | | | | | | | 1 | 1 |
| | | a2-34 | | 1 | 1 | | | | | | |
| | | a2-35 | | | | | 1 | 1 | | | |
| Monomer (b) | b1 | Triisopropylsilyl Acrylate | | | | | | | | 30 | |
| | | Triisopropylsilyl Methacrylate | | | | | | | | | 30 |
| | b2 | Methyl Methacrylate | 25 | 30 | 35 | 30 | 30 | 30 | 30 | 35 | 30 |
| | | 2-Methoxyethyl Acrylate | | 10 | 5 | 5 | | 10 | 10 | | 10 |
| | | 2-Methoxyethyl Methacrylate | 15 | | | 5 | | | | 5 | |
| | | n-Butyl Acrylate | | | | | 10 | | | | |
| Total of Monomers | | | 100 | 100 | 100 | 100 | 100 | 100 | 100 | 100 | 100 |
| Solvent | | Xylene | 50 | 80 | 90 | 90 | 50 | 50 | 50 | 100 | 100 |
| | | 1-Butanol | | 20 | 10 | 10 | | | | | |
| | | Propyleneglycol Monomethyl Ether | 50 | | | | 50 | 50 | 50 | | |
| Content of Monomer (a1) in Monomer (a) | | | 78% | 50% | 67% | 78% | 50% | 67% | 78% | 50% | 63% |
| Weight Average Molecular Weight (Mw) | | | 28900 | 29400 | 30600 | 27800 | 31800 | 32000 | 29500 | 28900 | 29700 |
| Non-volatile Matter Content(%, 125°C, 1hour) | | | 50.8 | 51.2 | 51.3 | 51.4 | 50.9 | 51.8 | 51.5 | 51.1 | 50.8 |
| Name of Copolymer Solution | | | A-17 | A-18 | A-19 | A-20 | A-21 | A-22 | A-23 | A-24 | A-25 |

**[Table 8]**

| Table 8 | | | Production Example of Copolymer Solution | | | | | | | |
|---|---|---|---|---|---|---|---|---|---|---|
| | | | P26 | P27 | P28 | P29 | P30 | P31 | P32 | P33 |
| Monomer (a) | a1 | a1-1 | | | | 8 | 28 | 53 | 60 | |
| | a2 | a2-1 | | | | 24 | 22 | 5 | | |
| | | a2-8 | | | | 16 | 6 | 1 | | |
| | | a2-15 | | | | 8 | 2 | 1 | | |
| | | a2-22 | | | | 3 | 1 | | | |
| | | a2-29 | | | | 1 | 1 | | | |
| Monomer (b) | b1 | Triisopropylsilyl Acrylate | 60 | | | | | | | |
| | | Triisopropylsilyl Methacrylate | | 50 | 30 | | | | | |
| | b2 | Methyl Methacrylate | 35 | 10 | 15 | 30 | 30 | 30 | 30 | |
| | | 2-Methoxyethyl Acrylate | | 10 | | 10 | 10 | 10 | 10 | 10 |
| | | 2-Methoxyethyl Methacrylate | | 30 | 50 | | | | | 20 |
| | | n-Butyl Acrylate | 5 | | 5 | | | | | |
| | | Ethyl Acrylate | | | | | | | | 60 |
| | | Versatic Acid Zinc Acrylate | | | | | | | | 10 |
| Total of Monomers | | | 100 | 100 | 100 | 100 | 100 | 100 | 100 | 100 |
| Solvent | | Xylene | 100 | 100 | 100 | 50 | 80 | 80 | 50 | 80 |
| | | Propyleneglycol Monomethyl Ether | | | | 50 | 20 | 20 | 50 | 20 |
| Content of Monomer (a1) in Monomer (a) | | | - | - | - | 13% | 47% | 88% | 100% | - |
| Weight Average Molecular Weight (Mw) | | | 28800 | 30300 | 29800 | 31100 | 29800 | 30400 | 31500 | 14900 |
| Non-volatile Matter Content(%, 125°C, 1hour) | | | 51.3 | 51.2 | 51.6 | 51.4 | 51.1 | 51.6 | 50.9 | 50.1 |
| Name of Copolymer Solution | | | B-1 | B-2 | B-3 | C-1 | C-2 | C-3 | C-4 | C-5 |

### 1-4. Other Production Examples

### <Production Example D1 (Production of Gum Rosin Solution)>

300 g of gum rosin made in China (WW) and 310 g of xylene were charged to a flask equipped with a thermometer, a reflux condenser, and a stirrer. Thereafter, the reaction mixture was dehydrated under reflux under reduced pressure for 1 hour at 70 to 80°C to obtain a xylene solution of gum rosin (brown transparent liquid, 50% solid content). The non-volatile matter content of the solution obtained was 50.3%.

### <Production Example D2 (Production of gum rosin zinc salt solution)>

240 g of gum rosin made in China (WW) and 360 g of xylene were charged to a flask equipped with a thermometer, a reflux condenser, and a stirrer, and 120 g of zinc oxide was further added such that all of the resin acid in the rosin form zinc salt. The reaction mixture was dehydrated under reflux under reduced pressure for 3 hours at 70 to 80°C. Then, the reaction mixture was cooled and filtered to obtain a xylene solution of gum rosin zinc salt (dark brown transparent liquid, 50% solid content). The non-volatile matter content of the solution obtained was 50.2%.

### <Production Example D3 (Production of Hydrogenated Rosin Zinc Salt Solution)>

A xylene solution of hydrogenated rosin zinc salt (dark brown transparent liquid, 50% solid content) was obtained in the same way as in Production Example D2, except for replacing the gum rosin made in China (WW) in Production Example D2 with hydrogenated gum rosin.

### 2. Examples 1 to 36 and Comparative Examples 1 to 5 (Production of Coating Composition)

The components shown in Tables 9 to 13 were blended by the ratio (mass%) shown in the same Tables, and were mixed and dispersed with glass beads having a diameter of 1.5 to 2.5 mm, thereby producing the coating composition.

**[Table 9]**

| Table 9 | | | Example | | | | | | | |
|---|---|---|---|---|---|---|---|---|---|---|
| | | | 1 | 2 | 3 | 4 | 5 | 6 | 7 | 8 |
| Copolymer A | Copolymer Solution A-1 | | 25 | | | | | | | |
| | Copolymer Solution A-2 | | | 25 | | | | | | |
| | Copolymer Solution A-3 | | | | 25 | | | | | |
| | Copolymer Solution A-4 | | | | | 25 | | | | |
| | Copolymer Solution A-5 | | | | | | 25 | | | |
| | Copolymer Solution A-6 | | | | | | | 25 | | |
| | Copolymer Solution A-7 | | | | | | | | 25 | |
| | Copolymer Solution A-8 | | | | | | | | | 25 |
| Release Modifier | Hydrogenated Rosin Zinc Salt Solution | | | | | | | | | 6 |
| | Gum Rosin Zinc Salt Solution | | 6 | | 6 | | 6 | | 6 | |
| | Gum Rosin Solution | | | 6 | | 6 | | 6 | | |
| Antifouling Agent | Cuprous Oxide | | 45 | 45 | 45 | 45 | 45 | 45 | 45 | 45 |
| | Copper Pyrithione | | 3 | 3 | 3 | 3 | 3 | 3 | 3 | 3 |
| Pigment | Red Oxide | | 2 | 2 | 2 | 2 | 2 | 2 | 2 | 2 |
| | Talc | | 2 | 2 | 2 | 2 | 2 | 2 | 2 | 2 |
| | Zinc Oxide | | 4 | 4 | 4 | 4 | 4 | 4 | 4 | 4 |
| | Titanium Oxide | | 1 | 1 | 1 | 1 | 1 | 1 | 1 | 1 |
| Other Additive | DISPARLON A603-20X | | 3 | 3 | 3 | 3 | 3 | 3 | 3 | 3 |
| | Tetraethoxy Silane | | 0.5 | 0.5 | 0.5 | 0.5 | 0.5 | 0.5 | 0.5 | 0.5 |
| | Tricresyl Phosphate | | 2 | 2 | 2 | 2 | 2 | 2 | 2 | 2 |
| Solvent | Xylene | | 3.5 | 5.5 | 3.5 | 5.5 | 3.5 | 5.5 | 3.5 | 5.5 |
| | 1-Butanol | | | 1 | | 1 | | 1 | | 1 |
| | Propylene Glycol Monomethyl Ether | | 3 | | 3 | | 3 | | 3 | |
| Total | | | 100 | 100 | 100 | 100 | 100 | 100 | 100 | 100 |
| Test Example 1 Rotary Test | Average Dissolution Amount of Coating Film (µm/month) | Initial - 6 Months | 10.0 | 7.5 | 7.9 | 5.6 | 6.4 | 5.1 | 4.2 | 2.5 |
| | | After 6-12 Months | 10.0 | 4.2 | 6.1 | 5.2 | 4.4 | 4.2 | 3.3 | 2.5 |
| | | After 12-18 Months | 6.7 | 8.3 | 7.0 | 5.8 | 7.5 | 5.8 | 4.2 | 3.3 |
| | | After 18-24 Months | 6.7 | 6.7 | 6.5 | 5.1 | 5.0 | 5.1 | 5.0 | 4.2 |
| | Condition of Coating Film after 24 Months | | A | A | A | A | A | A | A | A |
| Test Example 2 Antifouling Test | After 12 Months | | A | A | A | A | A | A | A | A |
| | After 24 Months | | B | B | B | B | B | B | B | B |

**[Table 10]**

| Table 10 | | | Example | | | | | | | |
|---|---|---|---|---|---|---|---|---|---|---|
| | | | 9 | 10 | 11 | 12 | 13 | 14 | 15 | 16 |
| Copolymer A | Copolymer Solution A-9 | | 25 | | | | | | | |
| | Copolymer Solution A-10 | | | 25 | | | | | | |
| | Copolymer Solution A-11 | | | | 25 | | | | | |
| | Copolymer Solution A-12 | | | | | 25 | | | | |
| | Copolymer Solution A-13 | | | | | | 25 | | | |
| | Copolymer Solution A-14 | | | | | | | 25 | | |
| | Copolymer Solution A-15 | | | | | | | | 25 | |
| | Copolymer Solution A-16 | | | | | | | | | 25 |
| Release Modifier | Hydrogenated Rosin Zinc Salt Solution | | | | | | 6 | | | |
| | Gum Rosin Zinc Salt Solution | | 6 | 6 | | 6 | | 6 | 6 | |
| | Gum Rosin Solution | | | | 6 | | | | | 6 |
| Antifouling Agent | Cuprous Oxide | | 45 | 45 | 45 | 45 | 45 | 45 | 45 | 45 |
| | Copper Pyrithione | | 3 | 3 | 3 | 3 | 3 | 3 | 3 | 3 |
| Pigment | Red Oxide | | 2 | 2 | 2 | 2 | 2 | 2 | 2 | 2 |
| | Talc | | 2 | 2 | 2 | 2 | 2 | 2 | 2 | 2 |
| | Zinc Oxide | | 4 | 4 | 4 | 4 | 4 | 4 | 4 | 4 |
| | Titanium Oxide | | 1 | 1 | 1 | 1 | 1 | 1 | 1 | 1 |
| Other Additive | DISPARLON A603-20X | | 3 | 3 | 3 | 3 | 3 | 3 | 3 | 3 |
| | Tetraethoxy Silane | | 0.5 | 0.5 | 0.5 | 0.5 | 0.5 | 0.5 | 0.5 | 0.5 |
| | Tricresyl Phosphate | | 2 | 2 | 2 | 2 | 2 | 2 | 2 | 2 |
| Solvent | Xylene | | 6.5 | 6.5 | 3.5 | 5.5 | 3.5 | 3.5 | 3.5 | 5.5 |
| | 1-Butanol | | | | | 1 | | | | 1 |
| | Propylene Glycol Monomethyl Ether | | | | 3 | | 3 | 3 | 3 | |
| Total | | | 100 | 100 | 100 | 100 | 100 | 100 | 100 | 100 |
| Test Example 1 Rotary Test | Average Dissolution Amount of Coating Film (µm/month) | Initial - 6 Months | 5.8 | 5.0 | 5.0 | 3.3 | 6.7 | 7.5 | 7.2 | 4.2 |
| | | After 6-12 Months | 4.2 | 4.2 | 1.7 | 1.7 | 3.3 | 5.8 | 5.3 | 4.1 |
| | | After 12-18 Months | 7.5 | 7.5 | 1.1 | 1.7 | 5.8 | 6.7 | 5.8 | 5.0 |
| | | After 18-24 Months | 5.8 | 5.0 | 2.3 | 1.6 | 7.5 | 6.8 | 5.0 | 5.1 |
| | Condition of Coating Film after 24 Months | | A | A | A | A | A | A | A | A |
| Test Example 2 Antifouling Test | After 12 Months | | A | A | A | A | A | A | A | A |
| | After 24 Months | | B | B | B | B | B | B | B | B |

**[Table 11]**

| Table 11 | | | Example | | | | | | | |
|---|---|---|---|---|---|---|---|---|---|---|
| | | | 17 | 18 | 19 | 20 | 21 | 22 | 23 | 24 |
| Copolymer A | Copolymer Solution A-17 | | 25 | | | | | | | |
| | Copolymer Solution A-18 | | | 25 | | | | | | |
| | Copolymer Solution A-19 | | | | 25 | | | | | |
| | Copolymer Solution A-20 | | | | | 25 | | | | |
| | Copolymer Solution A-21 | | | | | | 25 | | | |
| | Copolymer Solution A-22 | | | | | | | 25 | | |
| | Copolymer Solution A-23 | | | | | | | | 25 | |
| | Copolymer Solution A-24 | | | | | | | | | 25 |
| Release Modifier | Hydrogenated Rosin Zinc Salt Solution | | | 6 | | | 6 | | | |
| | Gum Rosin Zinc Salt Solution | | | | | 6 | | | 6 | 6 |
| | Gum Rosin Solution | | 6 | | 6 | | | 6 | | |
| Antifouling Agent | Cuprous Oxide | | 45 | 45 | 45 | 45 | 45 | 45 | 45 | 45 |
| | Copper Pyrithione | | 3 | 3 | 3 | 3 | 3 | 3 | 3 | 3 |
| Pigment | Red Oxide | | 2 | 2 | 2 | 2 | 2 | 2 | 2 | 2 |
| | Talc | | 2 | 2 | 2 | 2 | 2 | 2 | 2 | 2 |
| | Zinc Oxide | | 4 | 4 | 4 | 4 | 4 | 4 | 4 | 4 |
| | Titanium Oxide | | 1 | 1 | 1 | 1 | 1 | 1 | 1 | 1 |
| Other Additive | DISPARLON A603-20X | | 3 | 3 | 3 | 3 | 3 | 3 | 3 | 3 |
| | Tetraethoxy Silane | | 0.5 | 0.5 | 0.5 | 0.5 | 0.5 | 0.5 | 0.5 | 0.5 |
| | Tricresyl Phosphate | | 2 | 2 | 2 | 2 | 2 | 2 | 2 | 2 |
| Solvent | Xylene | | 5.5 | 5.5 | 3.5 | 3.5 | 3.5 | 5.5 | 6.5 | 6.5 |
| | 1-Butanol | | 1 | 1 | | | | 1 | | |
| | Propylene Glycol Monomethyl Ether | | | | 3 | 3 | 3 | | | |
| Total | | | 100 | 100 | 100 | 100 | 100 | 100 | 100 | 100 |
| Test Example 1 Rotary Test | Average Dissolution Amount of Coating Film (µm/month) | Initial - 6 Months | 5.0 | 5.5 | 4.2 | 5.0 | 4.2 | 2.5 | 3.3 | 5.0 |
| | | After 6-12 Months | 4.8 | 5.3 | 3.3 | 3.3 | 3.3 | 2.5 | 4.2 | 5.0 |
| | | After 12-18 Months | 4.9 | 5.0 | 4.2 | 4.2 | 3.4 | 3.3 | 4.2 | 10.0 |
| | | After 18-24 Months | 4.2 | 4.2 | 4.2 | 4.3 | 4.2 | 3.5 | 3.4 | 13.0 |
| | Condition of Coating Film after 24 Months | | A | A | A | A | A | A | A | A |
| Test Example 2 Antifouling Test | After 12 Months | | A | A | A | A | A | A | A | A |
| | After 24 Months | | B | B | B | B | B | B | B | B |

**[Table 12]**

| Table 12 | | | Example | | | | | | | |
|---|---|---|---|---|---|---|---|---|---|---|
| | | | 25 | 26 | 27 | 28 | 29 | 30 | 31 | 32 |
| Copolymer A | Copolymer Solution A-1 | | | 13 | | | | | | |
| | Copolymer Solution A-2 | | | | 13 | | | | | |
| | Copolymer Solution A-3 | | | | | 13 | | | | |
| | Copolymer Solution A-4 | | | | | | 13 | | | |
| | Copolymer Solution A-5 | | | | | | | 13 | | |
| | Copolymer Solution A-6 | | | | | | | | 13 | |
| | Copolymer Solution A-7 | | | | | | | | | 13 |
| | Copolymer Solution A-25 | | 25 | | | | | | | |
| Copolymer B | Copolymer Solution B-1 | | | 12 | | | 12 | | | |
| | Copolymer Solution B-2 | | | | 12 | | | 12 | | 12 |
| | Copolymer Solution B-3 | | | | | 12 | | | 12 | |
| Release Modifier | Hydrogenated Rosin Zinc Salt Solution | | | 6 | | 6 | | | 6 | |
| | Gum Rosin Zinc Salt Solution | | | | | | 6 | | | |
| | Gum Rosin Solution | | 6 | | 6 | | | 6 | | 6 |
| Antifouling Agent | Cuprous Oxide | | 45 | 45 | 45 | 45 | 45 | 45 | 45 | 45 |
| | Copper Pyrithione | | 3 | 3 | 3 | 3 | 3 | 3 | 3 | 3 |
| Pigment | Red Oxide | | 2 | 2 | 2 | 2 | 2 | 2 | 2 | 2 |
| | Talc | | 2 | 2 | 2 | 2 | 2 | 2 | 2 | 2 |
| | Zinc Oxide | | 4 | 4 | 4 | 4 | 4 | 4 | 4 | 4 |
| | Titanium Oxide | | 1 | 1 | 1 | 1 | 1 | 1 | 1 | 1 |
| Other Additive | DISPARLON A603-20X | | 3 | 3 | 3 | 3 | 3 | 3 | 3 | 3 |
| | Tetraethoxy Silane | | 0.5 | 0.5 | 0.5 | 0.5 | 0.5 | 0.5 | 0.5 | 0.5 |
| | Tricresyl Phosphate | | 2 | 2 | 2 | 2 | 2 | 2 | 2 | 2 |
| Solvent | Xylene | | 6.5 | 6.5 | 3.5 | 5.5 | 3.5 | 5.5 | 3.5 | 5.5 |
| | 1-Butanol | | | | | 1 | | 1 | | 1 |
| | Propylene Glycol Monomethyl Ether | | | | 3 | | 3 | | 3 | |
| Total | | | 100 | 100 | 100 | 100 | 100 | 100 | 100 | 100 |
| Test Example 1 Rotary Test | Average Dissolution Amount of Coating Film (µm/month) | Initial - 6 Months | 8.3 | 1.6 | 1.5 | 3.3 | 1.6 | 2.5 | 4.2 | 1.5 |
| | | After 6-12 Months | 8.4 | 5.0 | 4.8 | 4.2 | 6.7 | 5.8 | 4.5 | 5.0 |
| | | After 12-18 Months | 8.6 | 10.2 | 16.0 | 9.2 | 11.7 | 8.3 | 10.0 | 16.6 |
| | | After 18-24 Months | 10.0 | 16.7 | 13.3 | 8.5 | 20.0 | 16.6 | 11.7 | 13.3 |
| | Condition of Coating Film after 24 Months | | A | A | A | A | A | A | A | A |
| Test Example 2 Antifouling Test | After 12 Months | | A | A | A | A | A | A | A | A |
| | After 24 Months | | B | B | B | B | B | B | B | B |

**[Table 13]**

| Table 13 | | | Example | | | | Comparative Example | | | | |
|---|---|---|---|---|---|---|---|---|---|---|---|
| | | | 33 | 34 | 35 | 36 | 1 | 2 | 3 | 4 | 5 |
| Copolymer A | Copolymer Solution A-8 | | 31 | | | | | | | | |
| | Copolymer Solution A-10 | | | 25 | | | | | | | |
| | Copolymer Solution A-13 | | | | 13 | | | | | | |
| | Copolymer Solution A-14 | | | | | 25 | | | | | |
| Copolymer B | Copolymer Solution B-2 | | | | 12 | | | | | | |
| Other Polymer | Copolymer Solution C-1 | | | | | | 25 | | | | |
| | Copolymer Solution C-2 | | | | | | | 25 | | | |
| | Copolymer Solution C-3 | | | | | | | | 25 | | |
| | Copolymer Solution C-4 | | | | | | | | | 25 | |
| | Copolymer Solution C-5 | | | | | | | | | | 25 |
| Release Modifier | Hydrogenated Rosin Zinc Salt Solution | | | | 6 | | | | | | |
| | Gum Rosin Zinc Salt Solution | | | | | 6 | | | | | |
| | Gum Rosin Solution | | | 6 | | | 6 | 6 | 6 | 6 | 6 |
| Antifouling Agent | Cuprous Oxide | | 45 | 43 | | | 45 | 45 | 45 | 45 | 45 |
| | Copper Pyrithione | | 3 | 1 | | 1 | 3 | 3 | 3 | 3 | 3 |
| | Sea Nine | | | 1 | | 1 | | | | | |
| | Zineb | | | 1 | | 1 | | | | | |
| | Zinc Pyrithione | | | | 5 | 4 | | | | | |
| | ECONEA 028 | | | 1 | 7 | 4 | | | | | |
| | Medetomidine | | | 1 | | 1 | | | | | |
| Pigment | Red Oxide | | 2 | 2 | 10 | 10 | 2 | 2 | 2 | 2 | 2 |
| | Talc | | 2 | 2 | 8 | 8 | 2 | 2 | 2 | 2 | 2 |
| | Zinc Oxide | | 4 | 4 | 30 | 30 | 4 | 4 | 4 | 4 | 4 |
| | Titanium Oxide | | 1 | 1 | 1 | 1 | 1 | 1 | 1 | 1 | 1 |
| Other Additive | DISPARLON A603-20X | | 3 | 3 | 2 | 2 | 3 | 3 | 3 | 3 | 3 |
| | Tetraethoxy Silane | | 0.5 | 0.5 | 0.5 | 0.5 | 0.5 | 0.5 | 0.5 | 0.5 | 0.5 |
| | Tricresyl Phosphate | | 2 | 2 | 1 | 1 | 2 | 2 | 2 | 2 | 2 |
| Solvent | Xylene | | 5.5 | 5.5 | 4 | 2.5 | 3.5 | 3.5 | 5.5 | 3.5 | 5.5 |
| | 1-Butanol | | 1 | 1 | 0.5 | | | | 1 | | 1 |
| | Propylene Glycol Monomethyl Ether | | | | | 2 | 3 | 3 | | 3 | |
| Total | | | 100 | 100 | 100 | 100 | 100 | 100 | 100 | 100 | 100 |
| Test Example 1 Rotary Test | Average Dissolution Amount of Coating Film (µm/month) | Initial - 6 Months | 5.1 | 5.1 | 6.7 | 5.0 | 10.0 | 5.0 | 4.2 | 3.8 | 3.3 |
| | | After 6-12 Months | 4.2 | 4.2 | 6.8 | 5.1 | 5.0 | 3.5 | 0.8 | 1.5 | 0.8 |
| | | After 12-18 Months | 5.8 | 5.8 | 8.3 | 6.7 | 0.3 | 3.2 | 0.7 | 0.2 | 0.5 |
| | | After 18-24 Months | 5.1 | 5.1 | 11.7 | 8.3 | 0.8 | 3.0 | 0.5 | 0.3 | 0.3 |
| | Condition of Coating Film after 24 Months | | B | A | A | A | D | C | A | A | B |
| Test Example 2 Antifouling Test | After 12 Months | | A | A | A | A | A | A | B | C | C |
| | After 24 Months | | B | B | B | B | D | C | D | D | D |

Details of the components in Tables are as follows.

### <Release Modifier>

Hydrogenated rosin zinc salt solution: The one produced in Production Example D3 was used.

Gum rosin zinc salt solution: The one produced in Production Example D2 was used.

Gum rosin solution: The one produced in Production Example D1 was used.

### <Antifouling Agent>

Cuprous oxide: product name "NC-301" (made by NISSIN CHEMCO)
Copper pyrithione: product name "copper Omadine" (made by Lonza Group AG)
Sea Nine: product name "Sea Nine 211", 4,5-dichloro-2-octyl-4-isothiazolin-3-one (made by Rohm and Haas Company), xylene solution with 30% active ingredient
Zineb: [ethylene bis(dithiocarbamate)] zinc (made by OUCHI SHINKO CHEMICAL INDUSTRIAL CO., LTD.)
Zinc pyrithione: product name "zinc Omadine" (made by Lonza Group AG)
Econea 028: product name "Econea 028", 2-(p-chlorophenyl)-3-cyano-4-bromo-5-trifluoromethyl pyrrole (made by JANSSEN PMP)
Medetomidine: (±)-4-[1-(2,3-dimethylphenyl)ethyl]-1H-imidazole (made by Wako Pure Chemical Industries, Ltd.)

### <Pigment>

Red oxide: product name "BENGARAKINGYOKU" (made by MORISHITA BENGARA KOGYO CO., LTD)
Talc: product name "talc MS" (made by Nippon Talc Co., Ltd.)
Zinc oxide: product name "zinc oxide II" (made by Seido Chemical Industry Co., Ltd.)
Titanium oxide: product name "FR-41" (made by FURUKAWA CO., LTD.)

### <Other Additives>

DISPARLON A603-20X: amide based thixotropic agent: product name "DISPARLON A603-20X" (made by Kusumoto Chemicals, Ltd.)
Tetraethoxy silane: product name "Ethyl Silicate 28" (made by COLCOAT CO., LTD.)
Tricresyl phosphate: (made by DAIHACHI CHEMICAL INDUSTRY CO., LTD.)

### 3. Test

The following tests were performed for the coating compositions of Examples and Comparative Examples. Evaluation results are shown in Tables 9 to 13.

In all Comparative Examples, the result of at least one of the rotary test and the antifouling test was not satisfactory.

### <Test Example 1 (Rotary Test)>

A tank was provided, in the center thereof, with a rotating drum having a diameter of 515 mm and a height of 440 mm to allow the rotation of the drum by a motor. The tank was also provided with a cooling apparatus for keeping the temperature of seawater constant, and an automatic pH controller for keeping the pH of the seawater constant.

Test plates were prepared in accordance with the following method.

First, an anti-corrosive coating film was formed by applying an anti-corrosive coating material (an epoxy vinyl-based A/C) onto a titanium plate (71 x 100 x 0.5 mm) such that the thickness after drying would be about 100 µm, followed by drying. Then, coating compositions obtained in Examples and Comparative Examples were applied such that the thickness after drying would be about 300 µm. The applied coating was dried for 3 days at 40°C, thereby preparing the test plates.

The prepared test plates were fixed to the rotating drum of the rotary apparatus of the above-mentioned equipment to contact with the seawater, and the rotating drum was rotated at a speed of 20 knots. During the test, the temperature and the pH of the seawater were maintained at 25°C and at 8.0 to 8.2, respectively, and the seawater was replaced once every two weeks.

Initial film thickness and remaining film thickness were measured every 6 months for each of the test plates, using a shape measurement laser microscope VK-X100 (made by KEYENCE CORPORATION). The thickness of the dissolved coating film was calculated from the difference between the two values, thereby obtaining the average dissolution amount of the coating film per one month (µm/month). Further, when measuring the remaining film thickness after 24 months in the rotary test, the surface of each coating film was observed with naked eye and with a microscope to evaluate the surface condition of the coating film.

Evaluations of the surface conditions of the coating films were performed under the following criteria.
A: No defect observed
B: Hairline cracks observed in less than 10% of the entire area of the surface of the coating film
C: Hairline cracks observed in 10 to 30% of the entire area of the surface of the coating film
D: Hairline cracks observed in 30% or more of the entire area of the surface of the coating film
E: Coating film defects such as large cracks, blisters, and peel-offs (that only the surface or a part of the edge of the coating film peels off), delamination (the state in which the coating film peels off entirely and no test coating film remains) observed

### <Test Example 2 (Antifouling Test)>

Each of the coating compositions obtained in Examples and Comparative Examples was applied onto both surfaces of a hard vinyl chloride plate (100 x 200 x 2 mm) such that the thickness of a dried coating film would be about 300 µm. The applied coating obtained was dried for 3 days at room temperature (25°C), and the test plate having the dried coating film with a thickness of about 300 µm was prepared. This test plate was immersed at 1.5 m below sea level in Owase City, Mie Prefecture, Japan, and the test plate fouling due to attached objects was examined after 12 months and 24 months.

Evaluations were performed by visually observing the surface condition of the coating film in accordance with the following criteria.
A: Fouling organisms such as shellfish and algae do not attach, and slime hardly attaches.
B: Fouling organisms such as shellfish and algae do not attach, and slime thinly attaches (to the extent that the coating film surface is observable) and the slime can be removed when wiped softly with a brush.
C: Fouling organisms such as shellfish and algae do not attach, but slime thickly attaches (to the extent that the coating film surface is not observable) and the slime cannot be removed even when wiped strongly with a brush.
D: Fouling organisms such as shellfish and algae attach.

## Claims

1. An antifouling coating composition containing a copolymer A and an antifouling agent, wherein:
the copolymer A is a copolymer of a monomer (a) and an ethylenically unsaturated monomer (b) other than the monomer (a);
the monomer (a) is constituted of a monomer (a1) and a monomer (a2);
the monomer (a1) is represented by general formula (1);
the monomer (a2) is represented by general formula (2);
a content of the monomer (a1) in the monomer (a) is 50 to 80 mass%; 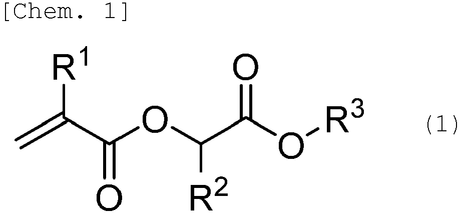
in general formula (1), R¹ represents a hydrogen atom or a methyl group, R² represents a hydrogen atom, a methyl group, or a phenyl group, and R³ represents an alkyl group which may be substituted with an alkoxy group having 1 to 8 carbon atoms or a phenyl group, or a phenyl group, the alkyl group having 1 to 8 carbon atoms; and 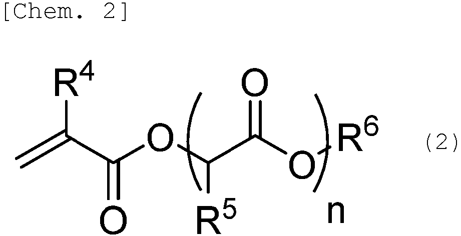
in general formula (2), R⁴ represents a hydrogen atom or a methyl group, R⁵ represents a hydrogen atom, a methyl group, or a phenyl group, R⁶ represents an alkyl group which may be substituted with an alkoxy group having 1 to 8 carbon atoms or a phenyl group, or a phenyl group, the alkyl group having 1 to 8 carbon atoms, and n represents an integer of 2 to 10.

2. The antifouling coating composition of Claim 1, further containing a copolymer B, wherein:
the monomer (b) is constituted of a monomer (b1) and a monomer (b2) other than the monomer (b1);
the monomer (b1) is represented by general formula (3);
the copolymer B is a copolymer of the monomer (b1) and the monomer (b2); and 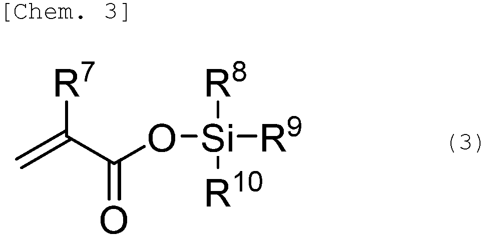
in general formula (3), R⁷ represents a hydrogen atom or a methyl group, and R⁸ to R¹⁰ each represent a branched alkyl group having 3 to 8 carbon atoms or a phenyl group, which are the same as or different from each other.

## Patentansprüche

1. Antifouling-Beschichtungszusammensetzung, die ein Copolymer A und ein Antifouling-Mittel enthält, wobei:
das Copolymer A ein Copolymer aus einem Monomer (a) und einem ethylenisch ungesättigten Monomer (b), das von dem Monomer (a) verschieden ist, ist;
das Monomer (a) aus einem Monomer (a1) und einem Monomer (a2) gebildet ist;
das Monomer (a1) durch die allgemeine Formel (1) dargestellt wird;
das Monomer (a2) durch die allgemeine Formel (2) dargestellt wird;
ein Gehalt des Monomers (a1) in dem Monomer (a) 50 bis 80 Masse-% beträgt; 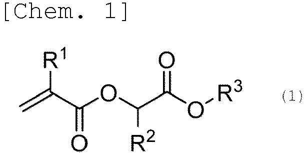 wobei in der allgemeinen Formel (1), R¹ ein Wasserstoffatom oder eine Methylgruppe darstellt, R² ein Wasserstoffatom, eine Methylgruppe oder eine Phenylgruppe darstellt und R³ eine Alkylgruppe, die mit einer Alkoxygruppe, die 1 bis 8 Kohlenstoffatome aufweist, oder einer Phenylgruppe substituiert sein kann, oder eine Phenylgruppe darstellt, wobei die Alkylgruppe 1 bis 8 Kohlenstoffatome aufweist; und 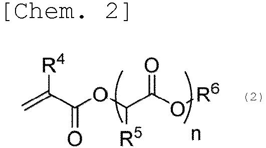 wobei in der allgemeinen Formel (2), R⁴ ein Wasserstoffatom oder eine Methylgruppe darstellt, R⁵ ein Wasserstoffatom, eine Methylgruppe oder eine Phenylgruppe darstellt, R⁶ eine Alkylgruppe, die mit einer Alkoxygruppe, die 1 bis 8 Kohlenstoffatome aufweist, oder einer Phenylgruppe substituiert sein kann, oder eine Phenylgruppe darstellt, wobei die Alkylgruppe 1 bis 8 Kohlenstoffatome aufweist, und n eine ganze Zahl von 2 bis 10 darstellt.

2. Antifouling-Beschichtungszusammensetzung nach Anspruch 1, die ferner ein Copolymer B enthält, wobei:
das Monomer (b) aus einem Monomer (b1) und einem Monomer (b2), das von dem Monomer (b1) verschieden ist, gebildet ist;
das Monomer (b1) durch die allgemeine Formel (3) dargestellt wird;
das Copolymer B ein Copolymer aus dem Monomer (b1) und dem Monomer (b2) ist; und 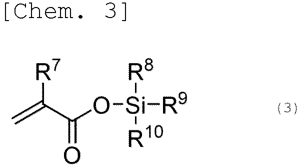 wobei in der allgemeinen Formel (3), R⁷ ein Wasserstoffatom oder eine Methylgruppe darstellt und R⁸ bis R¹⁰ jeweils eine verzweigte Alkylgruppe, die 3 bis 8 Kohlenstoffatome aufweist, oder eine Phenylgruppe darstellen, die gleich oder verschieden voneinander sind.

## Revendications

1. Composition de matériau de revêtement antisalissure contenant un copolymère A et un agent antisalissure :
le copolymère A étant un copolymère d'un monomère (a) et un monomère (b) éthyléniquement insaturé autre que le monomère (a) ;
le monomère (a) étant constitué d'un monomère (a1) et un monomère (a2);
le monomère (a1) étant représenté par la formule générale (1);
le monomère (a2) étant représenté par la formule générale (2) ;
un contenu du monomère (a1) dans le monomère (a) étant 50 à 80 masse%; 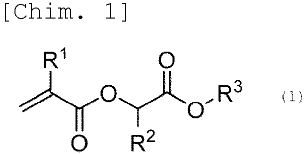
R¹ représentant, dans la formule générale (1), un atome d'hydrogène ou un groupe méthyl, R² représentant un atome d'hydrogène, un groupe méthyl, ou un groupe phényle, et R³ représentant un groupe alkyl qui peut être substitué avec un group alkoxy ayant 1 à 8 atomes de carbone ou un group phényle, ou un groupe phényle, le groupe alkyl ayant 1 à 8 atomes de carbone; et 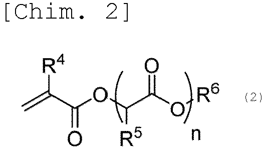
R⁴ représentant, dans la formule générale formule (2), un atome d'hydrogène ou un groupe méthyl, R⁵ représentant un atome d'hydrogène, un groupe méthyl, ou un groupe phényle, R⁶ représentant un groupe alkyl qui peut être substitué par un group alkoxy ayant 1 à 8 atomes de carbone ou un group phényle, ou un group phényle, le groupe alkyl ayant 1 à 8 atomes de carbone et n représentant un nombre entier de 2 à 10.

2. Composition de matériau de revêtement antisalissure selon la revendication 1, contenant en outre un copolymère B :
le monomère (b) étant constitué d'un monomère (b1) et un monomère (b2) autre que le monomère (b1);
le monomère (b1) étant représenté par la formule générale (3) ;
le copolymère B étant un copolymère du monomère (b1) et le monomère (b2); et 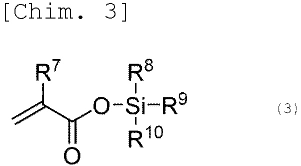
R⁷ représentant, dans la formule générale (3), un atome d'hydrogène ou un group méthyl, et R⁸ à R¹⁰ représentant chacun un group alkyl ramifié ayant 3 à 8 atomes de carbone ou un groupe phényle, qui sont identiques ou différents l'une à l'autre.
